# EUROPEAN PATENT SPECIFICATION

(11) **EP 4 354 639 B1**
(45) Date of publication and mention of the grant of the patent: **16.09.2026**
(21) Application number: 23167484.7
(22) Date of filing: 12.04.2023
(51) Int. Cl.: H01M 50/533, H01M 10/04, H01M 50/55, H01M 50/538

(54) **CYLINDRICAL BATTERY**
ZYLINDRISCHE BATTERIE
BATTERIE CYLINDRIQUE

(30) Priority: 13.10.2022 CN 202211256119
(43) Date of publication of application: 17.04.2024
(73) Proprietor: CALB Group Co., Ltd., Changzhou City, Jiangsu Province (CN)
(72) Inventor: WANG, Yawei, Changzhou City, Jiangsu Province (CN); QI, Binwei, Luoyang City, Henan Province (CN); SUN, Qianqian, Changzhou City, Jiangsu Province (CN); ZHANG, Lulu, Changzhou City, Jiangsu Province (CN)
(74) Representative: Becker, Eberhard

(56) References cited:
- CN-U- 211 376 807
- CN-U- 217 444 585
- JP-A- 2011 077 105
- US-A1- 2002 061 435

## Description

### BACKGROUND

### Technical Field

The disclosure relates to the technical field of batteries, and in particular to a cylindrical battery.

### Description of Related Art

In the related art, the tab of a battery may be used to connect to the electrode lead-out structure. Due to the limitation of the tab structure, the connection area between the tab and the electrode lead-out structure may be small.

CN 217444585 U relates to the technical field of batteries, in particular to a cylindrical electric core and a cylindrical battery.

### SUMMARY

The invention is set out in the appended set of claims. The following disclosure serves a better understanding of the present invention. The disclosure provides a cylindrical battery including the following.

One end of a winding cell is provided with a first tab and a center of the winding cell is formed with a central hole.

The first tab includes a first tab layer and a second tab layer disposed adjacent to each other along a radial direction of the central hole (211), the first tab layer includes a first single tab, the second tab layer includes at least two second single tabs, a number of the second single tabs of the second tab layer is one more than a number of the first single tab of the first tab layer. Along a radial direction of the central hole (211), the first tab (22) further comprises a third tab layer (227) disposed adjacent to the second tab layer (226), the third tab layer (227) comprises at least two third single tabs (2271), and a number of the third single tabs (2271) of the third tab layer (227) is consistent with a number of the second single tabs (2261) of the second tab layer (226) so that a thickness of the first tab (22) is increased without increasing a width of the first tab (22). The winding cell (20) is further provided with a second tab (23), polarities of the first tab (22) and the second tab (23) are opposite, and the first tab (22) and the second tab (23) are disposed at a same end of the winding cell (20), and a number of the first tab (22) is one and a number of the second tab (23) is one.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a structure a battery according to an exemplary embodiment.
FIG. 2 is a schematic view of a structure a winding cell of a battery according to an exemplary embodiment.
FIG. 3 is a schematic view of a partially expanded structure of a winding cell of a battery according to an exemplary embodiment.
FIG. 4 is a schematic view of a partially expanded structure of a winding cell of a battery according to another exemplary embodiment.
FIG. 5 is a schematic view of a winding structure of a winding unit of a battery according to an exemplary embodiment.
FIG. 6 is a schematic view of a partial structure of a winding unit of a battery according to an exemplary embodiment.

### DETAILED DESCRIPTION OF DISCLOSED EMBODIMENTS

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

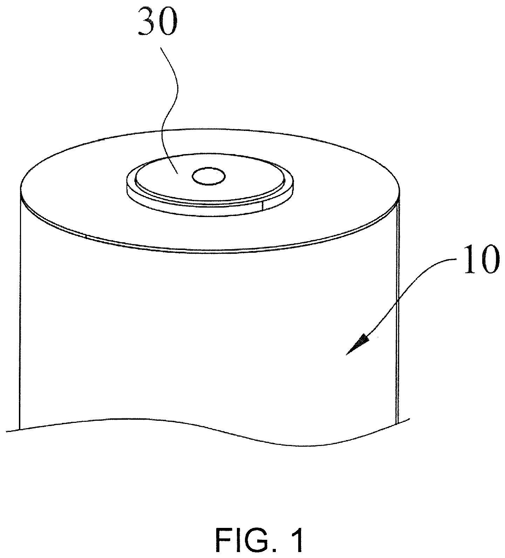

An embodiment of the disclosure provides a cylindrical battery. Please refer to FIG. 1 to FIG. 3. The cylindrical battery includes a winding cell 20, one end of the winding cell 20 is provided with a first tab 22, and a center of the winding cell 20 is formed with a central hole 211, wherein along a radial direction of the central hole 211, the first tab 22 includes a first tab layer 225 and a second tab layer 226 disposed adjacent to each other, the first tab layer 225 includes a first single tab 2251, the second tab layer 226 includes at least two second single tabs 2261, and the number of the second single tabs 2261 of the second tab layer 226 is one more than the number of the first single tab 2251 of the first tab layer 225.

The cylindrical battery of an embodiment of the disclosure includes the winding cell 20, one end of the winding cell 20 is provided with the first tab 22, the winding cell 20 is formed with the central hole 211, the first tab layer 225 includes the first single tab 2251, the second tab layer 226 includes the at least two second single tabs 2261, and the number of the second single tabs 2261 of the second tab layer 226 is one more than the number of the first single tab 2251 of the first tab layer 225, thereby ensuring that the first tab 22 can have a reliable welding area, so as to ensure the flow capacity of the first tab 22. Also, the width of the first tab 22 may show a changing trend to improve the insulation performance of the first tab 22, thereby improving the safety performance of the cylindrical battery.

It should be noted that the cylindrical battery is a wound battery. The winding cell 20 may include a winding cell body 21 and the first tab 22. One end of the winding cell body 21 leads out the first tab 22, and the central hole 211 of the winding cell body 21 may be a cylindrical hole. After winding to form the winding cell 20, the first tab 22 includes multiple tab layers, and after gathering the tab layers, the adjacent tab layers may be in contact, so as to form the first tab 22. For example, the tab layers include the first tab layer 225 and the second tab layer 226 disposed adjacent to each other. The first tab layer 225 and the second tab layer 226 may be gathered to implement reliable connection, thereby ensuring the structural strength and the flow capacity of the first tab 22.

The radial direction of the central hole 211 is a direction extending from the center of the central hole 211 toward a circumferential outer edge of the winding cell body 21. Along the radial direction of the central hole 211, the first tab 22 includes the first tab layer 225 and the second tab layer 226 disposed adjacent to each other, that is, the first tab layer 225 is closer to the central hole 211 than the second tab layer 226, and the number of the second single tabs 2261 of the second tab layer 226 is one more than the number of the first single tab 2251 of the first tab layer 225, that is, the first tab layer 225 close to the central hole 211 is narrower than the second tab layer 226 away from the central hole 211, which can not only ensure the flow capacity of the first tab 22, but also enable a side of the first tab 22 close to the central hole 211 to have a relatively large insulation distance from the adjacent second tab 23 with opposite polarity, so as to ensure the insulation performance between the first tab 22 and the second tab 23.

In an embodiment, a circumferential outer surface of the first tab 22 includes a first surface 221, a second surface 222, a third surface 223, and a fourth surface 224. The first surface 221 and the second surface 222 are disposed opposite to each other. The first surface 221 is located on a side of the first tab 22 close to the central hole 211. The second surface 222 is located on the other side of the first tab 22 away from the central hole 211. The opposite third surface 223 and fourth surface 224 are both connected to the first surface 221 and the second surface 222. The first surface 221 is basically a first arc surface, the second surface 222 is basically a second arc surface, the third surface 223 is basically a first plane, and the fourth surface 224 is basically a second plane. The circumferential outer surface of the first tab 22 is composed of the first surface 221, the second surface 222, the third surface 223, and the fourth surface 224. The first surface 221 and the second surface 222 disposed opposite to each other are respectively the first arc surface and the second arc surface, and the third surface 223 and the fourth surface 224 disposed opposite to each other are respectively the first plane and the second plane, so that the first tab 22 can have a relatively reliable top surface area.

The first surface 221 is formed on the side close to the central hole 211 of a cell, the second surface 222 is formed on the other side away from the central hole 211 of the cell, and the opposite third surface 223 and fourth surface 224 are both connected to the first surface 221 and the second surface 222.

In an embodiment, along a circumferential direction of the central hole 211, the difference between the width of the second tab layer 226 and the width of the first tab layer 225 is not less than the width of the second single tab 2261, so that the second tab layer 226 can have a larger width to increase the connection area between the first tab 22 and an electrode lead-out structure, thereby improving the connection strength between the first tab 22 and the electrode lead-out structure, and improving the flow capacity between the first tab 22 and the electrode lead-out structure.

The first tab 22 is connected to the electrode lead-out structure. The electrode lead-out structure may be an adapter piece, the electrode lead-out structure may be an electrode lead-out structure, or the electrode lead-out structure may be a casing structure 10. The first tab 22 may be electrically connected to the electrode lead-out structure through the adapter piece, the first tab 22 may be welded to the adapter piece, and the first tab 22 may have a sufficient welding area to form a stable welding connection with the adapter piece.

In an embodiment, the first tab layer 225 includes at least two first single tabs 2251. The adjacent first single tabs 2251 are disposed at an interval, and the adjacent second single tabs 2261 are disposed at an interval, so that the difference between the width of the second tab layer 226 and the width of the first tab layer 225 is greater than the width of the second single tab 2261. The number of the second single tabs 2261 of the second tab layer 226 is one more than the number of the first single tabs 2251 of the first tab layer 225, and the first tab layer 225 includes the at least two first single tabs 2251, thereby ensuring that the widths of the first tab layer 225 and the second tab layer 226 can both be relatively large, so as to ensure that the first tab 22 can have a relatively large area, thereby improving the flow capacity of the first tab 22.

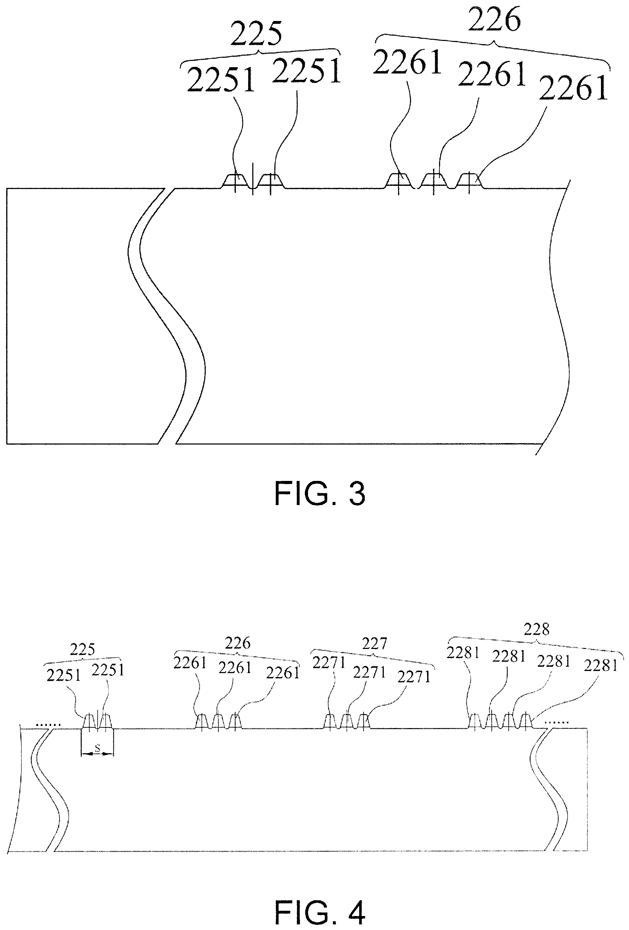

As shown in FIG. 3, the first tab layer 225 may include two first single tabs 2251, and the second tab layer 226 may include three second single tabs 2261. The two adjacent first single tabs 2251 may be connected, that is, bottom ends of the two adjacent first single tabs 2251 may be connected, bottom ends of the three second single tabs 2261 may be connected, and the width of the first single tab 2251 may be equal to the width of the second single tab 2261, so that the difference between the width of the second tab layer 226 and the width of the first tab layer 225 is equal to the width of one second single tab 2261. Alternatively, the bottom ends of the two adjacent first single tabs 2251 may be disposed at an interval, the bottom ends of the three second single tabs 2261 may be disposed at intervals, and the width of the first single tab 2251 may be equal to the width of the second single tab 2261, so that the difference between the width of the second tab layer 226 and the width of the first tab layer 225 is greater than the width of one second single tab 2261. Alternatively, the bottom ends of the two adjacent first single tabs 2251 may be connected, at least two of the bottom ends of the three second single tabs 2261 may be disposed at an interval, and the width of the first single tab 2251 may be equal to the width of the second single tab 2261, so that the difference between the width of the second tab layer 226 and the width of the first tab layer 225 is greater than the width of one second single tab 2261.

It should be noted that in some embodiments, it is not ruled out that the width of the first single tab 2251 may be consistent with the width of the second single tab 2261. The first single tab 2251 and the second single tab 2261 may have a rectangular structure, and at this time, the widths at each position of the first single tab 2251 and the second single tab 2261 may all be consistent. Alternatively, the first single tab 2251 and the second single tab 2261 may have a trapezoidal structure, and at this time, the widths at each position of the first single tab 2251 and the second single tab 2261 may all be inconsistent. When comparing the width of the second tab layer 226 with the width of the first tab layer 225, the widths located in the same plane are selected for comparison.

In an embodiment, along the radial direction of the central hole 211, the first tab 22 further includes a third tab layer 227 disposed adjacent to the second tab layer 226. The third tab layer 227 includes at least two third single tabs 2271. The number of the third single tabs 2271 of the third tab layer 227 is consistent with the number of the second single tabs 2261 of the second tab layer 226, so that the thickness of the first tab 22 can be increased without increasing the width of the first tab 22, so as to ensure the flow capacity of the first tab 22 and also control the insulation distance between the first tab 22 and the second tab 23 with opposite polarity.

The first tab layer 225, the second tab layer 226, and the third tab layer 227 are disposed along the radial direction of the central hole 211. The first tab layer 225, the second tab layer 226, and the third tab layer 227 are gathered together to form at least part of the first tab 22. The width of the first tab layer 225 is the smallest, and the widths of the second tab layer 226 and the third tab layer 227 may be basically consistent. For example, the first tab layer 225, the second tab layer 226, and the third tab layer 227 are gathered to form the first tab 22, the first tab layer 225 may form the first surface 221, and the third tab layer 227 may form the second surface 222. Alternatively, the first tab layer 225, the second tab layer 226, and the third tab layer 227 are gathered to form a part of the first tab 22, the first tab layer 225 may form the first surface 221, and the first tab 22 may also include other tab layer to form the second surface 222. Alternatively, the first tab layer 225, the second tab layer 226, and the third tab layer 227 are gathered to form a part of the first tab 22, the first tab layer 225, the second tab layer 226, and the third tab layer 227 form a middle part of the first tab 22, and the first tab 22 may also include other tab layers to form the first surface 221 and the second surface 222.

In an embodiment, along the radial direction of the central hole 211, the first tab 22 further includes a fourth tab layer 228 adjacent to the third tab layer 227. The fourth tab layer 228 includes at least three fourth single tabs 2281. The number of the fourth single tabs 2281 of the fourth tab layer 228 is one more than the number of the third single tabs 2271 of the third tab layer 227, so that the fourth tab layer 228 may not only increase the thickness of the first tab 22, but also increase the width of the first tab 22, so as to further increase the flow capacity of the first tab 22. The fourth tab layer 228 may be further from the central hole 211 than the first tab layer 225, the second tab layer 226, and the third tab layer 227. Therefore, even if the width of the fourth tab layer 228 is increased, considering that the radius of the circumference where the fourth tab layer 228 is located is large, the fourth tab layer 228 can still be ensured to have a relatively reliable insulation distance from the adjacent second tab 23 with opposite polarity.

The first tab layer 225, the second tab layer 226, the third tab layer 227, and the fourth tab layer 228 may be disposed along the radial direction of the central hole 211. The first tab layer 225, the second tab layer 226, the third tab layer 227, and the fourth tab layer 228 are gathered to form at least part of the first tab layer 22. The width of the first tab layer 225 is the smallest, the widths of the second tab layer 226 and the third tab layer 227 may be basically consistent, and the width of the fourth tab layer 228 is the largest. For example, the first tab layer 225, the second tab layer 226, the third tab layer 227, and the fourth tab layer 228 are gathered to form the first tab 22, the first tab layer 225 may form the first surface 221, and the fourth tab layer 228 may form the second surface 222. Alternatively, the first tab layer 225, the second tab layer 226, the third tab layer 227, and the fourth tab layer 228 are gathered to form a part of the first tab 22, the first tab layer 225 may form the first surface 221, and the first tab 22 may also include other tab layers to form the second surface 222. Alternatively, the first tab layer 225, the second tab layer 226, the third tab layer 227, and the fourth tab layer 228 are gathered to form a part of the first tab 22, the fourth tab layer 228 may form the second surface 222, and the first tab 22 may also include other tab layers to form the first surface 221.

In an embodiment, as shown in FIG. 4, along the radial direction of the central hole 211, the first tab layer 225, the second tab layer 226, the third tab layer 227, and the fourth tab layer 228 are located at the middle part of the first tab 22, that is, the first tab 22 may also include other tab layers for forming the first surface 221 and the second surface 222, thereby ensuring that the first tab 22 may have a sufficient thickness, so as to control the flow capacity of the first tab 22.

A battery includes a winding cell and an electrolyte, which are the smallest units capable of performing electrochemical reactions such as charging/discharging. The winding cell refers to a unit formed by winding a stack portion. The stack portion includes a first electrode, a separator, and a second electrode. When the first electrode is a positive electrode, the second electrode is a negative electrode. The polarities of the first electrode and the second electrode may be interchanged. The first tab 22 and the second tab 23 may be respectively extended from the first electrode and the second electrode, the winding cell 20 is formed after winding the first electrode and the second electrode, and the first tab 22 and the second tab 23 may be formed through gathering multiple tab layers.

Combined with FIG. 4, the first tab layer 225, the second tab layer 226, the third tab layer 227, and the fourth tab layer 228 may be extended from the first electrode. There are unshown tab layers on the left side of the first tab layer 225, and there are also unshown tab layers on the right side of the fourth tab layer 228. After winding the first electrode, multiple turns of tab layers may be formed. The first tab 22 may be formed after gathering the turns of the tab layers. The tab layers not shown in FIG. 4 are not limited here and may be determined according to actual requirements. For example, there may also be multiple tab layers on the left side of the first tab layer 225, and the number of single tabs included in each tab layer is not limited. Correspondingly, there may also be multiple tab layers on the right side of the fourth tab layer 228, and the number of single tabs included in each tab layer is not limited. Finally, the first tab 22 may be obtained after gathering the tab layers, and the circumferential outer surface of the first tab 22 may include the first surface 221, the second surface 222, the third surface 223, and the fourth surface 224. The first surface 221 is basically the first arc surface, the second surface 222 is basically the second arc surface, the third surface 223 is basically the first plane, and the fourth surface 224 is basically the second plane.

Considering that the first surface 221 and the second surface 222 are respectively formed by the tab layer closest to the central hole 211 and the tab layer farthest from the central hole 211, regardless of whether the first surface 221 and the second surface 222 are inclined and gathered toward the direction close to the central hole 211, the first surface 221 and the second surface 222 are bent along the circumferential direction, thereby respectively forming the first arc surface and the second arc surface. The third surface 223 and the fourth surface 224 are respectively formed by multiple tab layers at opposite ends along the circumferential direction of the central hole 211. Therefore, considering that the width of each tab layer changes, it cannot be ruled out that there will be slight protrusions or recessions on the third surface 223 and the fourth surface 224, but the overall trend of the third surface 223 and the fourth surface 224 is a plane. Therefore, the third surface 223 is basically the first plane and the fourth surface 224 is basically the second plane.

In an embodiment, the first surface 221 is formed by at least one single tab, the number of the single tabs of the first surface 221 is equal to the number of the first single tabs 2251 of the first tab layer 225, the second surface 222 is formed by multiple single tabs, and the number of the single tabs of the second surface 222 is equal to the number of the fourth single tabs 2281 of the fourth tab layer 228, so that the width of the second surface 222 can be greater than the width of the first surface 221. The width of the first surface 221 is relatively small, which may control the insulation distance between the first tab 22 close to the central hole 211 and the second tab 23, thereby preventing the risk of short circuit between the first tab 22 and the second tab 23. The width of the second surface 222 is relatively large, so the area of the first surface 221 may be effectively controlled, thereby increasing the structural strength and the flow capacity of the first tab 22.

It should be noted that the first tab 22 includes multiple tab layers, and the first tab 22 is formed after gathering the tab layers. Along the radial direction of the central hole 211, the width of each tab layer may be sequentially increased. Alternatively, along the radial direction of the central hole 211, the width of each tab layer may regularly increase and decrease. For example, the widths of the tab layers on the side close to the central hole 211 may be alternately disposed as 2, 3, 2, 3... according to the number of single tabs as shown in FIG. 3, and the widths of the tab layers on the side away from the central hole 211 may be alternately disposed as 3, 4, 3, 4... according to the number of single tabs as shown in FIG. 4, which is not limited here.

When at least two single tabs are ensured for each tab layer, the width of the tab layer may be the distance between the bottom ends of the single tabs on the two outermost sides of the tab layer. For example, the width of the first tab layer 225 as shown in FIG. 4 may be expressed as s.

In an embodiment, along the radial direction of the central hole 211, the first tab 22 includes multiple tab layers, the winding cell 20 includes multiple winding units, and the winding units are wound to form the winding cell 20, that is, the winding cell body 21 includes multiple winding units, the winding units are wound to form the winding cell body 21, and the winding units are connected along the circumferential direction of the central hole 211, thereby forming an integral structure. The winding cell body 21 defined herein includes multiple winding units, and each winding unit forms one turn structure of the winding cell body 21.

In an embodiment, an arc length of an nth tab layer is L, L = ar, a is a number of radians of the nth tab layer, r is a radius of the nth tab layer, r = r1+(φn-φ0)×(h/2π), r1 is a distance between the first surface 221 and a center line of the central hole 211, h is a thickness of the winding unit, φn is an angle at which the nth tab layer is wound from a winding starting point of the winding unit, and φ0 is an angle at which the first surface 221 is wound from the winding starting point of the winding unit. An angle that the winding unit winds between the nth tab layer and the first surface 221 may be obtained from φn-φ0, so that the number of layers that the winding unit winds between the nth tab layer and the first surface 221 may also be determined. Through obtaining the distance between the first surface 221 and the center line of the central hole 211, and calculating the sum of the thicknesses of the winding units between the nth tab layer and the first surface 221, the precise radius of the nth tab layer may be obtained.

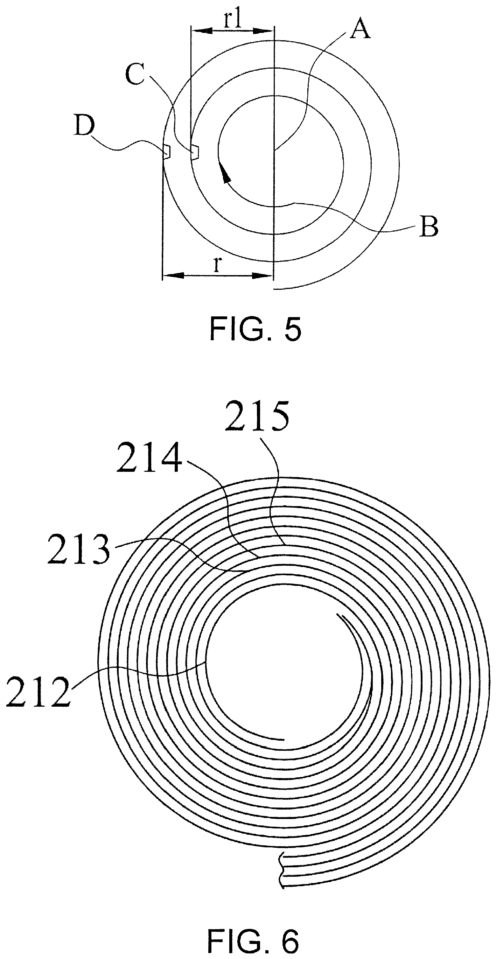

Combined with FIG. 5, the center line of the central hole 211 is expressed as A, the winding starting point of the winding unit is expressed as B, the first surface 221 may be expressed as C, the nth tab layer may be expressed as D, and the radius r of the nth tab layer and the distance r1 between the first surface 221 and the center line of the central hole 211 are respectively shown.

The angle of φn-φ0 is a natural multiple of 360° and r1 is the distance between the first surface 221 and the center line of the central hole 211. As shown in FIG. 5, considering that the first surface 221 is exposed, the distance r1 between the first surface 221 and the center line of the central hole 211 may be obtained through measurement. When the radius of the corresponding tab layer needs to be obtained, only the value of n needs to be determined. For example, when n = 1, the angle of φn-φ0 is 0. At this time, when r = r1 and n = 2, the angle of φn-φ0 is 360°, r = r1+h. The number of radians of the nth tab layer is a known number.

In an embodiment, as shown in FIG. 6, the winding unit includes a first electrode 212, a first insulating film 213, a second electrode 214, and a second insulating film 215 disposed in sequence. The first insulating film 213 and the second insulating film 215 implement the effective isolation of the first electrode 212 and the second electrode 214, so as to ensure the safety performance of the winding cell 20, and h is the sum of the thicknesses of the first electrode 212, the first insulating film 213, the second electrode 214, and the second insulating film 215.

In some embodiments, it is not ruled out that the winding unit may include the first electrode 212 and the second electrode 214. The first electrode 212 and the second electrode 214 may be in direct contact, and h is the sum of the thicknesses of the first electrode 212 and the second electrode 214.

In an embodiment, the first tab layer 225 forms at least part of the first surface 221, so that the width of the first surface 221 may be relatively small, so as to ensure the insulation performance between the first tab 22 and the second tab 23.

It should be noted that the first surface 221 may be formed by the first tab layer 225 or the second tab layer 226 may extend to a top end of the first tab layer 225 when being gathered, so as to form a part of the first surface 221, which is not limited here.

In an embodiment, the difference between the arc length of the second tab layer 226 and the arc length of the first tab layer 225 is not less than the width of the second single tab 2261, so that the second tab layer 226 may have a larger width, so as to increase the flow area of the first tab 22.

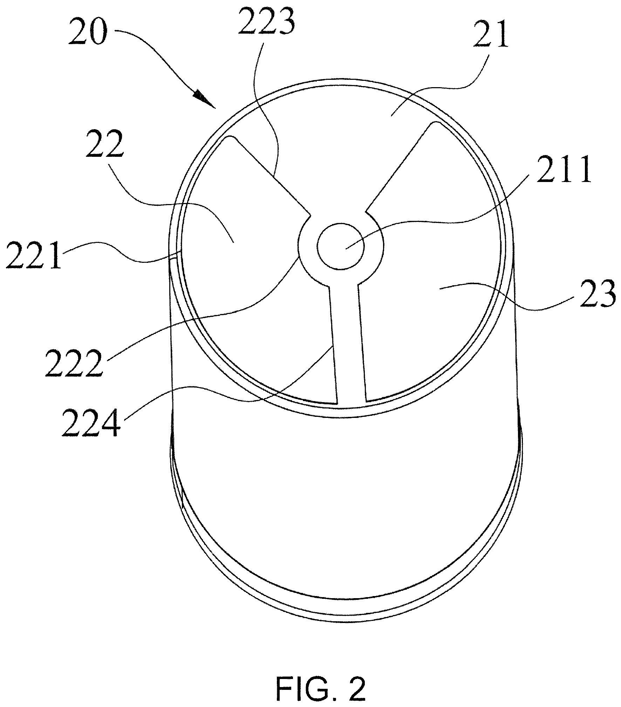

In an embodiment, as shown in FIG. 2, the winding cell 20 is further provided with the second tab 23. The polarities of the first tab 22 and the second tab 23 are opposite, the first tab 22 and the second tab 23 are disposed at the same end of the winding cell 20, and the first tab 22 and the second tab 23 are disposed at an interval, thereby ensuring the insulation between the first tab 22 and the second tab 23 to prevent the issue of short circuit.

The polarities of the first tab 22 and the second tab 23 are opposite, one of the first tab 22 and the second tab 23 is a positive tab, and the other one is a negative tab. The first tab 22 and the second tab 23 extend from the same side of the winding cell body 21, thereby preventing the issue of excessive accumulation of height space caused by the extension of the first tab 22 and the second tab 23 from two opposite sides of the winding cell body 21.

In an embodiment, the first tab 22 and the second tab 23 are disposed at an interval along the circumferential direction of the central hole 211, that is, the first tab 22 and the second tab 23 are disposed at an interval around the central hole 211 along the circumferential direction, thereby increasing the connection area of the first tab 22 and the second tab 23 to the greatest extent to ensure that the first tab 22 and the second tab 23 can have a reliable flow area.

In an embodiment, there is one first tab 22 and one second tab 23, and the first tab 22 and the second tab 23 are disposed along the circumferential direction of the central hole 211, which not only has a simple structure, but also ensures that the first tab 22 and the second tab 23 can have a reliable flow capacity on the basis of ensuring an insulation gap between the first tab 22 and the second tab 23.

It should be noted that in some embodiments, it is not ruled out that the first tab 22 and the second tab 23 may extend from the two opposite sides of the winding cell body 21. There may also respectively be multiple first tabs 22 and second tabs 23.

In an embodiment, a distance between the first surface 221 and the central hole 211 is greater than 0, thereby increasing the insulation distance between the first tab 22 and the second tab 23.

A distance between the first tab 22 and the central hole 211 is greater than 0, and a distance between the second tab 23 and the central hole 211 is greater than 0, thereby improving the insulation capacity between the first tab 22 and the second tab 23.

In an embodiment, combined with FIG. 2, the area of the first surface 221 is less than the area of the second surface 222, and the area of the third surface 223 is basically equal to the area of the fourth surface 224, thereby ensuring that the first tab 22 can have a reliable flow capacity.

It should be noted that in some embodiments, it is not ruled out that the first tab 22 and the second tab 23 may extend from the two opposite sides of the winding cell body 21. There may also respectively be multiple first tabs 22 and second tabs 23.

In an embodiment, as shown in FIG. 1, the cylindrical battery further includes an electrode lead-out structure 30. The electrode lead-out structure 30 may be disposed on the casing structure 10, and the winding cell 20 may be electrically connected to the electrode lead-out structure 30. For example, the first tab 22 of the winding cell 20 may be electrically connected to the electrode lead-out structure 30, the electrode lead-out structure 30 may be insulated from the casing structure 10, and the second tab 23 of the winding cell 20 may be electrically connected to the casing structure 10.

The cylindrical battery may include two electrode lead-out structures 30. The first tab 22 and the second tab 23 of the winding cell 20 may be respectively electrically connected to the two electrode lead-out structures 30.

In an embodiment, the casing structure 10 may include a cover plate and a casing member. The electrode lead-out structure 30 may be disposed on the cover plate, and the casing member may be formed with an accommodating space, thereby implementing the effective protection of the winding cell 20 after connecting the cover plate and the casing member. The cover plate and the casing member may be welded or the cover plate and the casing member may be riveted.

An embodiment of the disclosure also provides a battery group, which includes the cylindrical battery.

The cylindrical battery of the battery group according to an embodiment of the disclosure includes a winding cell 20, one end of the winding cell 20 is provided with a first tab 22, the winding cell 20 is formed with a central hole 211, a first tab layer 225 includes a first single tab 2251, a second tab layer 226 includes at least two second single tabs 2261, and the number of the second single tabs 2261 of the second tab layer 226 is one more than the number of the first single tab 2251 of the first tab layer 225, thereby ensuring that the first tab 22 can have a reliable welding area, so as to ensure the flow capacity of the first tab 22. Also, the width of the first tab 22 may show a changing trend to improve the insulation performance of the first tab 22, thereby improving the safety performance of the battery group.

In an embodiment, the battery group is a battery module or a battery pack.

The battery module includes multiple cylindrical batteries, and the battery module may further include a bracket. The batteries may be fixed on the bracket.

The battery pack includes multiple cylindrical batteries and a box. The box is used to fix the cylindrical batteries.

It should be noted that the battery pack includes a cylindrical battery. There may be multiple cylindrical batteries, and the cylindrical batteries are disposed in the box. The cylindrical batteries may be installed in the box after forming the battery module. Alternatively, the cylindrical batteries may be directly disposed in the box, that is, it is not necessary to group the cylindrical batteries, and the cylindrical batteries are fixed using the box.

## Claims

1. A cylindrical battery, comprising:
a winding cell (20), wherein one end of the winding cell (20) is provided with a first tab (22), and a center of the winding cell (20) is formed with a central hole (211);
wherein the first tab (22) comprises a first tab layer (225) and a second tab layer (226) disposed adjacent to each other along a radial direction of the central hole (211), the first tab layer (225) comprises a first single tab (2251), the second tab layer (226) comprises at least two second single tabs (2261), and a number of the second single tabs (2261) of the second tab layer (226) is one more than a number of the first single tab (2251) of the first tab layer (225),
wherein the cylindrical battery is **characterized in that**
along a radial direction of the central hole (211), the first tab (22) further comprises a third tab layer (227) disposed adjacent to the second tab layer (226), the third tab layer (227) comprises at least two third single tabs (2271), and a number of the third single tabs (2271) of the third tab layer (227) is consistent with a number of the second single tabs (2261) of the second tab layer (226) so that a thickness of the first tab (22) is increased without increasing a width of the first tab (22),
wherein the winding cell (20) is further provided with a second tab (23), polarities of the first tab (22) and the second tab (23) are opposite, and the first tab (22) and the second tab (23) are disposed at a same end of the winding cell (20), and
wherein a number of the first tab (22) is one and a number of the second tab (23) is one.

2. The cylindrical battery according to claim 1, wherein along a circumferential direction of the central hole (211), a difference between a width of the second tab layer (226) and a width of the first tab layer (225) is not less than a width of the second single tab (2261).

3. The cylindrical battery according to claim 2, wherein the first tab layer (225) comprises at least two of the first single tabs (2251), the adjacent first single tabs (2251) are disposed at an interval, and the adjacent second single tabs (2261) are disposed at an interval, so that a difference between a width of the second tab layer (226) and a width of the first tab layer (225) is greater than a width of the second single tab (2261).

4. The cylindrical battery according to claim 1, wherein along the radial direction of the central hole (211), the first tab (22) further comprises a fourth tab layer (228) disposed adjacent to the third tab layer (227), the fourth tab layer (228) comprises at least three fourth single tabs (2281), and a number of the fourth single tabs (2281) of the fourth tab layer (228) is one more than a number of the third single tabs (2271) of the third tab layer (227).

5. The cylindrical battery according to claim 4, wherein along the radial direction of the central hole (211), the first tab layer (225), the second tab layer (226), the third tab layer (227), and the fourth tab layer (228) are located at a middle part of the first tab (22).

6. The cylindrical battery according to claim 5, wherein a circumferential outer surface of the first tab (22) comprises a first surface (221), a second surface (222), a third surface (223), and a fourth surface (224), the first surface (221) and the second surface (222) are disposed opposite to each other, the first surface (221) is located on a side of the first tab (22) close to the central hole (211), the second surface (222) is located on other side of the first tab (22) away from the central hole (211), the opposite third surface (223) and fourth surface (224) are both connected to the first surface (221) and the second surface (222), the first surface (221) is a first arc surface, the second surface (222) is a second arc surface, the third surface (223) is a first plane, and the fourth surface (224) is a second plane;
the first surface (221) is formed by at least one single tab, a number of the single tab of the first surface (221) is equal to a number of the first single tab (2251) of the first tab layer (225), the second surface (222) is formed by a plurality of single tabs, and a number of the single tabs of the second surface (222) is equal to a number of the fourth single tabs (2281) of the fourth tab layer (228).

7. The cylindrical battery according to any one of claims 1-5, wherein a circumferential outer surface of the first tab (22) comprises a first surface (221), a second surface (222), a third surface (223), and a fourth surface (224), the first surface (221) and the second surface (222) are disposed opposite to each other, the first surface (221) is located on a side of the first tab (22) close to the central hole (211), the second surface (222) is located on other side of the first tab (22) away from the central hole (211), the opposite third surface (223) and fourth surface (224) are both connected to the first surface (221) and the second surface (222), the first surface (221) is a first arc surface, the second surface (222) is a second arc surface, the third surface (223) is a first plane, and the fourth surface (224) is a second plane.

8. The cylindrical battery according to claim 7, wherein along the radial direction of the central hole (211), the first tab (22) comprises a plurality of tab layers, the winding cell (20) comprises a plurality of winding units, and the winding units are wound to form the winding cell (20),
wherein an arc length of an nth tab layer is L, L = ar, a is a number of radians of the nth tab layer, r is a radius of the nth tab layer, r = r1+(φm-φ0)×(h/2π), r1 is a distance between the first surface (221) and a center line of the central hole (211), h is a thickness of the winding unit, φn is an angle at which the nth tab layer is wound from a winding starting point of the winding unit, φ0 is an angle at which the first surface (221) is wound from a winding starting point of the winding unit.

9. The cylindrical battery according to claim 8, wherein the first tab layer (225) forms at least part of the first surface (221).

10. The cylindrical battery according to claim 9, wherein a difference between an arc length of the second tab layer (226) and an arc length of the first tab layer (225) is not less than a width of the second single tab (2261).

11. The cylindrical battery according to claim 7, wherein a distance between the first surface (221) and the central hole (211) is greater than zero.

12. The cylindrical battery according to claim 7, wherein an area of the first surface (221) is less than an area of the second surface (222), and an area of the third surface (223) is equal to an area of the fourth surface (224).

## Patentansprüche

1. Zylindrische Batterie, umfassend:
eine Wickelzelle (20), wobei ein Ende der Wickelzelle (20) mit einer ersten Fahne (22) bereitgestellt ist und eine Mitte der Wickelzelle (20) mit einem Mittelloch (211) gebildet ist;
wobei die erste Fahne (22) eine erste Fahnenlage (225) und eine zweite Fahnenlage (226) umfasst, die entlang einer radialen Richtung des Mittellochs (211) benachbart zueinander angeordnet sind, wobei die erste Fahnenlage (225) eine erste Einzelfahne (2251) umfasst, die zweite Fahnenlage (226) mindestens zwei zweite Einzelfahnen (2261) umfasst, und eine Anzahl der zweiten Einzelfahnen (2261) der zweiten Fahnenlage (226) um eins größer ist als eine Anzahl der ersten Einzelfahne (2251) der ersten Fahnenlage (225),
wobei die zylindrische Batterie **dadurch gekennzeichnet ist, dass**
entlang einer radialen Richtung des Mittellochs (211), die erste Fahne (22) ferner eine dritte Fahnenlage (227) umfasst, die benachbart zu der zweiten Fahnenlage (226) angeordnet ist, die dritte Fahnenlage (227) mindestens zwei dritte Einzelfahnen (2271) umfasst und eine Anzahl der dritten Einzelfahnen (2271) der dritten Fahnenlage (227) mit einer Anzahl der zweiten Einzelfahnen (2261) der zweiten Fahnenlage (226) übereinstimmt, so dass eine Dicke der ersten Fahne (22) erhöht wird, ohne eine Breite der ersten Fahne (22) zu vergrößern,
wobei die Wickelzelle (20) ferner mit einer zweiten Fahne (23) bereitgestellt ist, die Polaritäten der ersten Fahne (22) und der zweiten Fahne (23) entgegengesetzt sind und die erste Fahne (22) und die zweite Fahne (23) an einem gemeinsamen Ende der Wickelzelle (20) angeordnet sind, und
wobei eine Anzahl der ersten Fahne (22) eins beträgt und eine Anzahl der zweiten Fahne (23) eins beträgt.

2. Zylindrische Batterie nach Anspruch 1, wobei entlang einer Umfangsrichtung des Mittellochs (211) eine Differenz zwischen einer Breite der zweiten Fahnenlage (226) und einer Breite der ersten Fahnenlage (225) nicht kleiner als eine Breite der zweiten Einzelfahne (2261) ist.

3. Zylindrische Batterie nach Anspruch 2, wobei die erste Fahnenlage (225) mindestens zwei der ersten Einzelfahnen (2251) umfasst, die benachbarten ersten Einzelfahnen (2251) in einem Abstand zueinander angeordnet sind und die benachbarten zweiten Einzelfahnen (2261) in einem Abstand zueinander angeordnet sind, so dass eine Differenz zwischen einer Breite der zweiten Fahnenlage (226) und einer Breite der ersten Fahnenlage (225) größer als eine Breite der zweiten Einzelfahne (2261) ist.

4. Zylindrische Batterie nach Anspruch 1, wobei entlang der radialen Richtung des Mittellochs (211) die erste Fahne (22) ferner eine vierte Fahnenlage (228) umfasst, die benachbart zu der dritten Fahnenlage (227) angeordnet ist, die vierte Fahnenlage (228) mindestens drei vierte Einzelfahnen (2281) umfasst und eine Anzahl der vierten Einzelfahnen (2281) der vierten Fahnenlage (228) um eins größer als eine Anzahl der dritten Einzelfahnen (2271) der dritten Fahnenlage (227) ist.

5. Zylindrische Batterie nach Anspruch 4, wobei sich entlang der radialen Richtung des Mittellochs (211) die erste Fahnenlage (225), die zweite Fahnenlage (226), die dritte Fahnenlage (227) und die vierte Fahnenlage (228) in einem Mittelabschnitt der ersten Fahne (22) befinden.

6. Zylindrische Batterie nach Anspruch 5, wobei eine äußere Umfangsfläche der ersten Fahne (22) eine erste Oberfläche (221), eine zweite Oberfläche (222), eine dritte Oberfläche (223) und eine vierte Oberfläche (224) umfasst, wobei die erste Oberfläche (221) und die zweite Oberfläche (222) einander gegenüberliegend angeordnet sind, sich die erste Oberfläche (221) auf einer Seite der ersten Fahne (22) nahe dem Mittelloch (211) befindet, sich die zweite Oberfläche (222) auf der anderen Seite der ersten Fahne (22) entfernt von dem Mittelloch (211) befindet, die gegenüberliegende dritte Oberfläche (223) und die vierte Oberfläche (224) beide mit der ersten Oberfläche (221) und der zweiten Oberfläche (222) verbunden sind, die erste Oberfläche (221) eine erste Bogenfläche ist, die zweite Oberfläche (222) eine zweite Bogenfläche ist, die dritte Oberfläche (223) eine erste Ebene ist und die vierte Oberfläche (224) eine zweite Ebene ist;
die erste Oberfläche (221) durch mindestens eine Einzelfahne gebildet ist, wobei eine Anzahl der Einzelfahne der ersten Oberfläche (221) einer Anzahl der ersten Einzelfahne (2251) der ersten Fahnenlage (225) entspricht, die zweite Oberfläche (222) durch eine Vielzahl von Einzelfahnen gebildet ist, und eine Anzahl der Einzelfahnen der zweiten Oberfläche (222) einer Anzahl der vierten Einzelfahnen (2281) der vierten Fahnenlage (228) entspricht.

7. Zylindrische Batterie nach einem der Ansprüche 1 bis 5, wobei eine äußere Umfangsfläche der ersten Fahne (22) eine erste Oberfläche (221), eine zweite Oberfläche (222), eine dritte Oberfläche (223) und eine vierte Oberfläche (224) umfasst, wobei die erste Oberfläche (221) und die zweite Oberfläche (222) einander gegenüberliegend angeordnet sind, sich die erste Oberfläche (221) auf einer Seite der ersten Fahne (22) nahe dem Mittelloch (211) befindet, sich die zweite Oberfläche (222) auf der anderen Seite der ersten Fahne (22) entfernt von dem Mittelloch (211) befindet, die gegenüberliegende dritte Oberfläche (223) und die vierte Oberfläche (224) beide mit der ersten Oberfläche (221) und der zweiten Oberfläche (222) verbunden sind, die erste Oberfläche (221) eine erste Bogenfläche ist, die zweite Oberfläche (222) eine zweite Bogenfläche ist, die dritte Oberfläche (223) eine erste Ebene ist und die vierte Oberfläche (224) eine zweite Ebene ist.

8. Zylindrische Batterie nach Anspruch 7, wobei entlang der radialen Richtung des Mittellochs (211) die erste Fahne (22) eine Vielzahl von Fahnenlagen umfasst, die Wickelzelle (20) eine Vielzahl von Wickeleinheiten umfasst und die Wickeleinheiten gewickelt sind, um die Wickelzelle (20) zu bilden,
wobei eine Bogenlänge einer n-ten Fahnenlage L beträgt, L = ar, wobei a das Bogenmaß der n-ten Fahnenlage ist, r ein Radius der n-ten Fahnenlage ist, r = r1 + (φn - φ0) × (h/2π), r1 ein Abstand zwischen der ersten Oberfläche (221) und einer Mittellinie des Mittellochs (211) ist, h eine Dicke der Wickeleinheit ist, φn ein Winkel ist, unter dem die n-te Fahnenlage von einem Wickelstartpunkt der Wickeleinheit gewickelt ist, φ0 ein Winkel ist, unter dem die erste Oberfläche (221) von einem Wickelstartpunkt der Wickeleinheit gewickelt ist.

9. Zylindrische Batterie nach Anspruch 8, wobei die erste Fahnenlage (225) zumindest einen Teil der ersten Oberfläche (221) bildet.

10. Zylindrische Batterie nach Anspruch 9, wobei eine Differenz zwischen einer Bogenlänge der zweiten Fahnenlage (226) und einer Bogenlänge der ersten Fahnenlage (225) nicht kleiner als eine Breite der zweiten Einzelfahne (2261) ist.

11. Zylindrische Batterie nach Anspruch 7, wobei ein Abstand zwischen der ersten Oberfläche (221) und dem Mittelloch (211) größer als Null ist.

12. Zylindrische Batterie nach Anspruch 7, wobei eine Fläche der ersten Oberfläche (221) kleiner als eine Fläche der zweiten Oberfläche (222) ist und eine Fläche der dritten Oberfläche (223) gleich einer Fläche der vierten Oberfläche (224) ist.

## Revendications

1. Batterie cylindrique, comprenant:
une cellule enroulée (20), dans laquelle une extrémité de la cellule enroulée (20) est munie d'une première languette (22), et
le centre de la cellule enroulée (20) comporte un trou central (211) ;dans laquelle la première languette (22) comprend une première couche de languettes (225) et
une deuxième couche de languettes (226) disposées de manière adjacente l'une à l'autre le long d'une direction radiale du trou central (211), la première couche de languettes (225) comprend une première languette individuelle (2251), la deuxième couche de languettes (226) comprend au moins deux deuxièmes languettes individuelles (2261), et le nombre de ces deuxièmes languettes individuelles (2261) de la deuxième couche de languettes (226) est supérieur d'une unité au nombre de la première languette individuelle (2251) de la première couche de languettes (225),la batterie cylindrique étant **caractérisée en ce que** le long d'une direction radiale du trou central (211), la première languette (22) comprend en outre une troisième couche de languettes (227) disposée à proximité immédiate de la deuxième couche de languettes (226), la troisième couche de languettes (227) comprend au moins deux troisièmes languettes individuelles (2271), et le nombre de ces troisièmes languettes individuelles (2271) de la troisième couche de languettes (227) correspond au nombre de deuxièmes languettes individuelles (2261) de la deuxième couche de languettes (226), de sorte que l'épaisseur de la première languette (22) est augmentée sans augmenter la largeur de la première languette (22),la cellule enroulée (20) étant en outre pourvue d'une deuxième languette (23), les polarités de la première languette (22) et de la deuxième languette (23) sont opposées, et la première languette (22) et la deuxième languette (23) sont disposées à une même extrémité de la cellule enroulée (20), et dans laquelle le nombre de la première languette (22) est égal à un et le nombre de la deuxième languette (23) est égal à un.

2. Batterie cylindrique selon la revendication 1, dans laquelle, le long d'une direction circonférentielle du trou central (211), la différence entre la largeur de la deuxième couche de languettes (226) et la largeur de la première couche de languettes (225) n'est pas inférieure à la largeur de la deuxième languette individuelle (2261).

3. Batterie cylindrique selon la revendication 2, dans laquelle la première couche de languettes (225) comprend au moins deux des premières languettes individuelles (2251), les premières languettes individuelles adjacentes (2251) sont espacées les unes des autres, et les deuxièmes languettes individuelles adjacentes (2261) sont espacées les unes des autres, de sorte que la différence entre la largeur de la deuxième couche de languettes (226) et celle de la première couche de languettes (225) est supérieure à la largeur de la deuxième languette individuelle (2261).

4. Batterie cylindrique selon la revendication 1, dans laquelle, le long de la direction radiale du trou central (211), la première languette (22) comprend en outre une quatrième couche de languettes (228) disposée à proximité de la troisième couche de languettes (227), la quatrième couche de languettes (228) comprend au moins trois quatrièmes languettes individuelles (2281), et le nombre de ces quatrièmes languettes individuelles (2281) de la quatrième couche de languettes (228) est supérieur d'une unité au nombre de troisièmes languettes individuelles (2271) de la troisième couche de languettes (227).

5. Batterie cylindrique selon la revendication 4, dans laquelle, le long de la direction radiale du trou central (211), la première couche de languettes (225), la deuxième couche de languettes (226), la troisième couche de languettes (227) et la quatrième couche de languettes (228) sont situées au niveau d'une partie centrale de la première languette (22).

6. Batterie cylindrique selon la revendication 5, dans laquelle une surface périphérique extérieure de la première languette (22) comprend une première surface (221), une deuxième surface (222), une troisième surface (223) et une quatrième surface (224), la première surface (221) et la deuxième surface (222) sont disposées en vis-à-vis l'une de l'autre, la première surface (221) est située sur un côté de la première languette (22) proche du trou central (211), la deuxième surface (222) est située sur l'autre côté de la première languette (22) éloigné du trou central (211), la troisième surface opposée (223) et la quatrième surface (224) sont toutes deux reliées à la première surface (221) et à la deuxième surface (222), la première surface (221) est une première surface courbe, la deuxième surface (222) est une deuxième surface courbe, la troisième surface (223) est un premier plan, et la quatrième surface (224) est un deuxième plan ;la première surface (221) est formée par au moins une languette individuelle, le nombre de languettes individuelles de la première surface (221) est égal au nombre de la première languette individuelle (2251) de la première couche de languettes (225), la deuxième surface (222) est formée par une pluralité de languettes individuelles, et le nombre de languettes individuelles de la deuxième surface (222) est égal au nombre de quatrièmes languettes individuelles (2281) de la quatrième couche de languettes (228).

7. Batterie cylindrique selon l'une quelconque des revendications 1 à 5, dans laquelle une surface périphérique extérieure de la première languette (22) comprend une première surface (221), une deuxième surface (222), une troisième surface (223) et une quatrième surface (224), la première surface (221) et la deuxième surface (222) sont disposées en vis-à-vis l'une de l'autre, la première surface (221) est située sur un côté de la première languette (22) proche du trou central (211), la deuxième surface (222) est située sur l'autre côté de la première languette (22) éloigné du trou central (211), la troisième surface opposée (223) et la quatrième surface (224) sont toutes deux reliées à la première surface (221) et à la deuxième surface (222), la première surface (221) est une première surface courbe, la deuxième surface (222) est une deuxième surface courbe, la troisième surface (223) est un premier plan, et la quatrième surface (224) est un deuxième plan.

8. Batterie cylindrique selon la revendication 7, dans laquelle, le long de la direction radiale du trou central (211), la première languette (22) comprend une pluralité de couches de languettes, la cellule enroulée (20) comprend une pluralité d'unités d'enroulement, et les unités d'enroulement sont enroulées pour former la cellule enroulée (20),dans laquelle la longueur d'arc d'une n-ième couche de languette est L, L = ar, a est un nombre de radians de la n-ième couche de languette, r est un rayon de la n-ième couche de languette, r = r1+(φn-φ0)×(h/2π), r1 est une distance entre la première surface (221) et une ligne centrale du trou central (211), h est l'épaisseur de l'unité d'enroulement, φn est l'angle sous lequel la n-ième couche de languette est enroulée à partir d'un point de départ d'enroulement de l'unité d'enroulement, φ0 est l'angle sous lequel la première surface (221) est enroulée à partir d'un point de départ d'enroulement de l'unité d'enroulement.

9. Batterie cylindrique selon la revendication 8, dans laquelle la première couche de languettes (225) forme au moins une partie de la première surface (221).

10. Batterie cylindrique selon la revendication 9, dans laquelle la différence entre la longueur d'arc de la deuxième couche de languettes (226) et la longueur d'arc de la première couche de languettes (225) n'est pas inférieure à la largeur de la deuxième languette individuelle (2261).

11. Batterie cylindrique selon la revendication 7, dans laquelle la distance entre la première surface (221) et le trou central (211) est supérieure à zéro.

12. Batterie cylindrique selon la revendication 7, dans laquelle la surface de la première surface (221) est inférieure à celle de la deuxième surface (222), et la surface de la troisième surface (223) est égale à celle de la quatrième surface (224).
